# EUROPEAN PATENT APPLICATION

(11) **EP 4 632 733 A1**
(43) Date of publication of application: **15.10.2025**
(21) Application number: 24763107.0
(22) Date of filing: 27.02.2024
(51) Int. Cl.: G10L 15/22

(54) **VOICE INTERACTION METHOD AND RELATED DEVICE**

(30) Priority: 28.02.2023 CN 202310224268
(71) Applicant: Huawei Technologies Co., Ltd., Shenzhen, Guangdong 518129 (CN)
(72) Inventor: LONG, Shuiping, Shenzhen, Guangdong 518129 (CN); XU, Qiang, Shenzhen, Guangdong 518129 (CN); WU, Wenhao, Shenzhen, Guangdong 518129 (CN); ZENG, Yuhao, Shenzhen, Guangdong 518129 (CN); LI, Chenhe, Shenzhen, Guangdong 518129 (CN)
(74) Representative: Maiwald GmbH
(86) International application number: PCT/CN2024/078662
(87) International publication number: WO 2024/179425

(57) **Abstract**

A speech interaction method and a related device are provided, and relate to the artificial intelligence field. A first device obtains IMU data and illuminance data of the first device when detecting a first event (S201); determines, based on the IMU data and the illuminance data of the first device, whether a user performs a first preset action (S202); if the first device determines that the user performs the first preset action, starts a microphone of the first device, and obtains a first audio signal collected by the microphone (S203); determines, based on the first audio signal, whether a type of the first audio signal is an approaching human voice (S204); and starts a voice assistant of the first device if the first device determines that the type of the first audio signal is the approaching human voice (S205). An event in which the user approaches the first device can be more accurately detected based on the IMU data and the illuminance data, rather than detecting the event in which the user approaches the device based only on acceleration data, where the user needs to significantly raise a wrist/hand. This solution provides higher sensitivity, and can be used to implement detection when a wrist is raised or a hand is raised naturally.

## Description

This application claims priority to Chinese Patent Application No. 202310224268.2, filed with the China National Intellectual Property Administration on February 28, 2023 and entitled "SPEECH INTERACTION METHOD AND RELATED DEVICE", which is incorporated herein by reference in its entirety.

### TECHNICAL FIELD

This application relates to the artificial intelligence field, and in particular, to a speech interaction method and a related device.

### BACKGROUND

Currently, there are mainly two voice assistant interaction manners. In one manner, a user speaks out a specific wake-up word (for example, "Xiaoyi Xiaoyi"), and an intelligent terminal initiates a voice session after recognizing a speech signal. This manner has a privacy issue in a public place, and has lengthy interaction. In the other manner, a user performs a specific action, for example, a significant wrist raising action, or holding and pressing a physical button (for example, a power button or a motion shortcut button). A button operation needs a large force and delay, a restart/power-off screen may be displayed accidentally, and an interaction process is not easy enough.

### SUMMARY

This application provides a speech interaction method and a related device, to improve sensitivity of detecting an interaction operation.

According to a first aspect, this application provides a speech interaction method, applied to a first device, and the method includes:

The first device obtains inertial measurement unit (inertial measurement unit, IMU) data and illuminance data of the first device when detecting a first event; determines, based on the IMU data and the illuminance data of the first device, whether a user performs a first preset action; if the first device determines that the user performs the first preset action, starts a microphone of the first device, and obtains a first audio signal collected by the microphone; determines, based on the first audio signal, whether a type of the first audio signal is an approaching human voice; and starts a voice assistant of the first device if the first device determines that the type of the first audio signal is the approaching human voice.

The first preset action is a wrist raising action or a hand raising action.

An event in which the user approaches the first device can be more accurately detected based on the IMU data and the illuminance data, rather than detecting the event in which the user approaches the device based only on acceleration data, where the user needs to significantly raise a wrist/hand. The solution in this application provides higher sensitivity, and can be used to implement detection when a wrist is raised or a hand is raised naturally.

In a possible implementation, the first event is a wrist raising hardware interrupt event, a hand raising hardware interrupt event of the first device, a press-to-wake event of the first device, a hand-raise-to-wake event of the first device, or a wrist-raise-to-wake event of the first device

In a possible implementation, the method in this application further includes:
after starting the microphone of the first device, continuously obtaining IMU data and illuminance data that are collected by the first device; determining, based on the IMU data and the illuminance data that are collected by the first device, whether the user performs a second preset action; and
starting the voice assistant of the first device if determining that the type of the first audio signal is the approaching human voice includes:
   starting the voice assistant of the first device if determining that the type of the first audio signal is the approaching human voice and determining that the user performs the second preset action.

The second preset action is a wrist raising keeping action or a hand raising keeping action.

After the microphone of the first device is started, the IMU data and the illuminance data that are collected by the first device are continuously obtained, and whether the user keeps the wrist raising action or the hand raising action is determined based on the collected IMU data and the illuminance data. The voice assistant of the first device is started only when it is determined that the user keeps the wrist raising action or keeps the hand raising action, and the type of the first audio signal is the approaching human voice. This helps reduce a false wake-up rate and interference.

In a possible implementation, the method in this application further includes:
If determining that the user does not perform the second preset action, the first device turns off the microphone of the first device.

When it is determined that the user does not perform the second preset action, that is, the user does not keep the hand raising action or does not keep the hand raising action, it indicates that the user does not accurately wake up the voice assistant, and the first device turns off the microphone in this case. This can reduce power of the first device, and further reduce a false wake-up rate of the voice assistant.

In a possible implementation, collection duration of the IMU data and the illuminance data that are used to determine whether the user performs the first preset action is first preset duration; collection duration of the IMU data and the illuminance data that are used to determine whether the user performs the second preset action is second preset duration; and the first preset duration is greater than the second preset duration.

The second preset duration is set to be less than the first preset duration, so that the long IMU data and the long illuminance data do not need to be collected before whether the user performs the second preset action is determined, and whether the user performs the second preset action can be quickly detected.

When the collection duration of the IMU data and the illuminance data that are used to determine whether the user performs the second preset action is less than the collection duration of the IMU data and the illuminance data that are used to determine whether the user performs the first preset action, interpolation processing may be separately performed on the IMU data and the illuminance data that are used to determine whether the user performs the second preset action, so that equivalent duration of the IMU data and the illuminance data that are used to determine whether the user performs the second preset action is consistent with the collection duration of the IMU data and the illuminance data that are used to determine whether the user performs the first preset action, and further whether the user performs the first preset action and the second preset action can be predicted and determined by using a same prediction model.

In a possible implementation, the first event is the wrist raising hardware interrupt event, the hand raising hardware interrupt event of the first device, the hand-raise-to-wake event of the first device, or the wrist-raise-to-wake event of the first device; and obtaining the IMU data and the illuminance data of the first device includes:
starting an ambient light sensor of the first device, collecting the ambient illuminance data of the first device, continuing to collect the IMU data, obtaining buffered IMU data related to the first event, and performing zero padding on illuminance data related to the first event.

Zero padding is performed on the illuminance data, so that equivalent duration of the illuminance data can be consistent with collection duration of the IMU data. Further, when whether the user performs the first preset action is determined, data in a complete wrist raising phase or hand raising phase can be used, to enable a determining result more accurate, and improve the wake-up success rate and reduce the false wake-up rate in user experience.

In a possible implementation, duration of the first audio signal is less than or equal to 0.5s, and determining, based on the first audio signal, whether the type of the first audio signal is the approaching human voice is implemented by a digital signal processor DSP of the first device.

The duration of the first audio signal is set to be less than or equal to 0.5s, so that a text corresponding to the first audio signal can be echoed in real time when the voice assistant is subsequently started to recognize a first speech signal. In addition, the first audio signal is an audio signal on which automatic gain control (automatic gain control, AGC), noise reduction, dereverberation, or compression processing is not performed, without loss of information of the approaching human voice, and the voice type of the first audio signal is determined by using the original audio signal on which AGC, noise reduction, dereverberation, or compression processing is not performed. This can improve precision of the determined voice type of the first audio signal.

In a possible implementation, the first audio signal is obtained through collection by a plurality of microphones of the first device.

In a wind noise scenario, wind noise signals exist in audio signals collected by different microphones. Wind noise reduction processing may be performed, by using wind noise in an audio signal collected by one microphone, on wind noise in an audio signal collected by another microphone, and then a voice type of an audio signal obtained after wind noise reduction processing is performed is predicted. This can obtain a more accurate prediction result.

In a possible implementation, the method in this application further includes:
The first device determines a to-be-executed task based on an audio signal collected by the microphone of the first device; the first device obtains identity information of the user if the to-be-executed task is a sensitive task; and the first device determines the user as a target user based on the identity information of the user, and executes the to-be-processed task.

The user is a user of the first device, and the target user is an owner of the first device.

The foregoing manner can prevent a non-owner of the first device from executing a security -sensitive speech task on the first device, and ensure information security of a device of the owner of the first device.

In a possible implementation, the method in this application further includes:
After starting the voice assistant, the first device displays, in real time, a text corresponding to the collected audio signal.

According to a second aspect, this application provides an electronic device, including:
an obtaining unit, configured to obtain IMU data and illuminance data of the electronic device when a first event is detected;
a determining unit, configured to determine, based on the IMU data and the illuminance data of the electronic device, whether a user performs a first preset action; and
a starting unit, configured to: if it is determined that the user performs the first preset action, start a microphone of the electronic device, where the obtaining unit is further configured to obtain a first audio signal collected by the microphone;
the determining unit is further configured to determine, based on the first audio signal, whether a type of the first audio signal is an approaching human voice; and
the starting unit is further configured to start a voice assistant of the electronic device if it is determined that the type of the first audio signal is the approaching human voice.

In a possible implementation, the first event is a wrist raising hardware interrupt event, a hand raising hardware interrupt event of the electronic device, a press-to-wake event of the electronic device, a hand-raise-to-wake event of the electronic device, or a wrist-raise-to-wake event of the electronic device.

In a possible implementation, the obtaining unit is further configured to: after the starting unit starts the microphone of the electronic device, continuously obtain IMU data and illuminance data that are collected by the electronic device;
the determining unit is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit is specifically configured to:
   start the voice assistant of the electronic device if it is determined that the type of the first audio signal is the approaching human voice and determined that the user performs the second preset action.

In a possible implementation, the starting unit is further configured to:
if it is determined that the user does not perform the second preset action, turn off the microphone of the electronic device.

In a possible implementation, collection duration of the IMU data and the illuminance data that are used to determine whether the user performs the first preset action is first preset duration; collection duration of the IMU data and the illuminance data that are used to determine whether the user performs the second preset action is second preset duration; and the first preset duration is greater than the second preset duration.

In a possible implementation, the first event is the wrist raising hardware interrupt event, the hand raising hardware interrupt event of the electronic device, the hand-raise-to-wake event of the electronic device, or the wrist-raise-to-wake event of the electronic device; and in the aspect of obtaining the IMU data and the illuminance data of the electronic device, the obtaining unit is specifically configured to:
start an ambient light sensor of the electronic device, collect the ambient illuminance data of the electronic device, continue to collect the IMU data, obtain buffered IMU data related to the first event, and perform zero padding on illuminance data related to the first event.

In a possible implementation, duration of the first audio signal is less than or equal to 0.5s, and determining, based on the first audio signal, whether the type of the first audio signal is the approaching human voice is implemented by a digital signal processor (digital signal processor, DSP) of the electronic device.

In a possible implementation, the first audio signal is obtained through collection by a plurality of microphones of the electronic device.

In a possible implementation, the determining unit is further configured to determine a to-be-executed task based on an audio signal collected by the microphone of the electronic device;
the obtaining unit is further configured to obtain identity information of the user if the to-be-executed task is a sensitive task; and
the electronic device further includes:
   an execution unit, configured to: determine the user as a target user based on the identity information of the user, and execute the to-be-processed task.

In a possible implementation, the electronic device further includes:
a display unit, configured to: after the voice assistant is started, display, in real time, a text corresponding to the collected audio signal.

According to a third aspect, this application provides another speech interaction method, applied to a first device, and the method includes:

The first device obtains IMU data of the first device when detecting a first event; determines, based on the IMU data of the first device, whether a user performs a first preset action; if the first device determines that the user performs the first preset action, starts a microphone of the first device, and obtains a first audio signal collected by the microphone; determines, based on the first audio signal, whether a type of the first audio signal is an approaching human voice; and starts a voice assistant of the first device if the first device determines that the type of the first audio signal is the approaching human voice.

The first event is a wrist raising event of the first device, a hand raising event of the first device, or a wrist rotation event of the first device; and the wrist raising event of the first device, the hand raising event of the first device, and the wrist rotation event of the first device are all obtained by using a same event prediction model.

The event prediction model may be used not only in detection of the wrist raising event, detection of the wrist rotation event, and detection of the hand raising event, but also in detection of an event in another application, for example, an event in a raise-to-speak application and an event in a raise-to-wake application. This is not limited herein. Therefore, the event prediction model may be considered as a common capability of the first device. The first event is detected based on the common capability of the first device, and the first device does not need to separately train a neural network model dedicated to detecting the first event. This reduces workload of the first device, and reduces computing power consumption of the first device. In addition, after detecting the first event, the first device further determines whether the user performs the first preset action; if determining that the user performs the first preset action, the first device starts the microphone of the first device, to obtain the first audio signal collected by the microphone, and determines, based on the first audio signal, whether the type of the first audio signal is the approaching human voice; and the first device starts the voice assistant of the first device if determining that the type of the first audio signal is the approaching human voice. This manner helps reduce a probability of starting the voice assistant of the first device.

In a possible implementation, that the first device determines, based on the IMU data of the first device, whether the user performs the first preset action includes:

The first device obtains posture information of the first device through calculation based on the IMU data of the first device; obtains acceleration information of the first device from the IMU data of the first device; and if the posture information of the first device is within a preset posture range, the acceleration information of the first device is within a preset acceleration range, and duration of the first event is within a preset duration range, the first device determines that the user performs the first preset action.

This manner helps improve precision of determining whether the user performs the first preset action.

In a possible implementation, the method in this application further includes:
after starting the microphone of the first device, continuously obtaining IMU data and illuminance data that are collected by the first device; determining, based on the IMU data and the illuminance data that are collected by the first device, whether the user performs a second preset action; and
starting the voice assistant of the first device if determining that the type of the first audio signal is the approaching human voice includes:
   starting the voice assistant of the first device if determining that the type of the first audio signal is the approaching human voice and determining that the user performs the second preset action.

The second preset action is a wrist raising keeping action or a hand raising keeping action.

After the microphone of the first device is started, the IMU data and the illuminance data that are collected by the first device are continuously obtained, and whether the user keeps a wrist raising action or a hand raising action is determined based on the collected IMU data and the illuminance data. The voice assistant of the first device is started only when it is determined that the user keeps the wrist raising action or keeps the hand raising action, and the type of the first audio signal is the approaching human voice. This helps reduce a false wake-up rate and interference.

In a possible implementation, the method in this application further includes:
If determining that the user does not perform the second preset action, the first device turns off the microphone of the first device.

When it is determined that the user does not perform the second preset action, that is, the user does not keep the hand raising action or does not keep the hand raising action, it indicates that the user does not accurately wake up the voice assistant, and the first device turns off the microphone in this case. This can reduce power of the first device, and further reduce a false wake-up rate of the voice assistant.

In a possible implementation, duration of the first audio signal is less than or equal to 0.5s, and determining, based on the first audio signal, whether the type of the first audio signal is the approaching human voice is implemented by a digital signal processor DSP of the first device.

The duration of the first audio signal is set to be less than or equal to 0.5s, so that a text corresponding to the first audio signal can be echoed in real time when the voice assistant is subsequently started to recognize the first speech signal. In addition, the first audio signal is an audio signal on which AGC, noise reduction, dereverberation, or compression processing is not performed, without loss of information of the approaching human voice, and the voice type of the first audio signal is determined by using the original audio signal on which AGC, noise reduction, dereverberation, or compression processing is not performed. This can improve precision of the determined voice type of the first audio signal.

In a possible implementation, the first audio signal is obtained through collection by a plurality of microphones of the first device.

In a wind noise scenario, wind noise signals exist in audio signals collected by different microphones. Wind noise reduction processing may be performed, by using wind noise in an audio signal collected by one microphone, on wind noise in an audio signal collected by another microphone, and then a voice type of an audio signal obtained after wind noise reduction processing is performed is predicted. This can obtain a more accurate prediction result.

In a possible implementation, the method in this application further includes:
The first device determines a to-be-executed task based on an audio signal collected by the microphone of the first device; the first device obtains identity information of the user if the to-be-executed task is a sensitive task; and the first device determines the user as a target user based on the identity information of the user, and executes the to-be-processed task.

The user is a user of the first device, and the target user is an owner of the first device.

The foregoing manner can prevent a non-owner of the first device from executing a security-sensitive speech task on the first device, and ensure information security of a device of the owner of the first device.

In a possible implementation, the method in this application further includes:

After starting the voice assistant, the first device displays, in real time, a text corresponding to the collected audio signal.

According to a fourth aspect, this application provides another electronic device, including:
an obtaining unit, configured to obtain IMU data of a first device when a first event is detected;
a determining unit, configured to determine, based on the IMU data of the first device, whether a user performs a first preset action; and
a starting unit, configured to: if it is determined that the user performs the first preset action, start a microphone of the first device, where the obtaining unit is further configured to obtain a first audio signal collected by the microphone;
the determining unit is further configured to determine, based on the first audio signal, whether a type of the first audio signal is an approaching human voice; and
the starting unit is further configured to start a voice assistant of the first device if it is determined that the type of the first audio signal is the approaching human voice.

The first event is a wrist raising event of the first device, a hand raising event of the first device, or a wrist rotation event of the first device; and the wrist raising event of the first device, the hand raising event of the first device, and the wrist rotation event of the first device are all obtained by using a same event prediction model.

In a possible implementation, in the aspect of determining, based on the IMU data of the first device, whether the user performs the first preset action, the determining unit is further configured to:

The first device obtains posture information of the first device through calculation based on the IMU data of the first device; obtains acceleration information of the first device from the IMU data of the first device; and if the posture information of the first device is within a preset posture range, the acceleration information of the first device is within a preset acceleration range, and duration of the first event is within a preset duration range, the first device determines that the user performs the first preset action.

In a possible implementation, the obtaining unit is further configured to: after the starting unit starts the microphone of the electronic device, continuously obtain IMU data and illuminance data that are collected by the electronic device;
the determining unit is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit is specifically configured to:
   start the voice assistant of the electronic device if it is determined that the type of the first audio signal is the approaching human voice and determined that the user performs the second preset action.

In a possible implementation, duration of the first audio signal is less than or equal to 0.5s, and determining, based on the first audio signal, whether the type of the first audio signal is the approaching human voice is implemented by a DSP of the electronic device.

In a possible implementation, the first audio signal is obtained through collection by a plurality of microphones of the electronic device.

In a possible implementation, the determining unit is further configured to determine a to-be-executed task based on an audio signal collected by the microphone of the electronic device;
the obtaining unit is further configured to obtain identity information of the user if the to-be-executed task is a sensitive task; and
the electronic device further includes:
   an execution unit, configured to: determine the user as a target user based on the identity information of the user, and execute the to-be-processed task.

In a possible implementation, the electronic device further includes:
a display unit, configured to: after the voice assistant is started, display, in real time, a text corresponding to the collected audio signal.

According to a fifth aspect, this application provides another electronic device, including a processor and a memory. The memory is configured to store program code. The processor is configured to invoke the program code stored in the memory, to perform the method provided in any one of the first aspect, the third aspect, or the possible implementations of the first aspect, or the method provided in any possible implementation of the third aspect.

According to a sixth aspect, this application provides a computer storage medium, including computer instructions. When the computer instructions are run on an electronic device, the electronic device is enabled to perform the method provided in any possible implementation of the first aspect.

According to a seventh aspect, this application provides a computer program product. When the computer program product runs on a computer, the computer is enabled to perform the method provided in any one of the first aspect, the third aspect, or the possible implementations of the first aspect, or the method provided in any possible implementation of the third aspect.

It may be understood that the electronic device provided in the second aspect, the electronic device provided in the third aspect, the computer storage medium provided in the fourth aspect, or the computer program product provided in the fifth aspect are all configured to perform the method provided in any one of the first aspect, the third aspect, or the possible implementations of the first aspect, or the method provided in any possible implementation of the third aspect. Therefore, for beneficial effect that can be achieved by the electronic device, the computer storage medium, the computer program product, refer to the beneficial effect in the corresponding methods. Details are not described herein again.

### BRIEF DESCRIPTION OF DRAWINGS

FIG. 1a is a diagram of a scenario of a speech interaction method according to an embodiment of this application;
FIG. 1b is a diagram of a scenario of another speech interaction method according to an embodiment of this application;
FIG. 1c is a diagram of a scenario of another speech interaction method according to an embodiment of this application;
FIG. 1d is a diagram of a scenario of another speech interaction method according to an embodiment of this application;
FIG. 2 is a schematic flowchart of a speech interaction method according to an embodiment of this application;
FIG. 3 is a diagram of changes of both illuminance data and IMU data in a wrist raising process;
FIG. 4 is a diagram of strengths of audio signals collected by a wrist wearable device within a deflection angle range according to an embodiment of this application;
FIG. 5 is a diagram of strengths of audio signals collected by both a primary microphone and a secondary microphone according to an embodiment of this application;
FIG. 6 is a diagram of a preset region according to an embodiment of this application;
FIG. 7 is a diagram of lip heights and a lip width according to an embodiment of this application;
FIG. 8 is a diagram of a structure of an electronic device according to an embodiment of this application;
FIG. 8a is a diagram of a structure of another electronic device according to an embodiment of this application; and
FIG. 9 is a diagram of a structure of another electronic device according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

First, terms in this application are explained.

An intelligent voice assistant (intelligent personal assistant, IPA) is a personal virtual assistant driven by artificial intelligence, and may also be referred to as an intelligent assistant, a voice assistant, or the like. The intelligent voice assistant allows a user to easily operate various functions of an intelligent terminal, like a smartphone, a smartwatch, a tablet computer, a notebook computer, an AI speaker, a smart large screen, and a smart cockpit, or perform internet search through speech interaction, for example, setting an alarm clock on a smartphone, reading an email by using a text-to-speech technology, playing and searching for music, and sending an SMS message. Specific intelligent personal assistants include Huawei's Xiaoyi (corresponding to Celia, an international version), Apple's Siri, Amazon's Alexa, Microsoft's Cortana, and Google's Google Assistant.

A wrist wearable device (wearable device) is an intelligent device worn on a wrist of a user, and may be generally classified into a smartwatch, a sports watch, and a smart band based on a screen size or whether the wrist wearable device has a screen, a computing capability of an application processor, and an intelligence degree (for example, whether an application can be downloaded and installed automatically and whether a voice assistant is supported).

An inertial measurement unit (IMU, inertial measurement unit) is an apparatus for measuring an angular velocity and an acceleration of a rigid object in three-dimensional space, and is generally for identifying and tracking a posture and motion of a device, such as a tilt angle of the device relative to a horizontal plane, an orientation of the device (namely, a deflection angle with a geomagnetic north pole), an accumulated rotation angle of the device, a relative motion speed, and a displacement.

An IMU wrist raising hardware interrupt indicates low-power basic wrist raising detection implemented in an IMU component. A hardware interrupt is generated once a wrist raising event is detected.

An ambient light sensor (ambient light sensor, Als) may sense ambient light conditions, may collect ambient illuminance data, and indicates a processing chip to automatically adjust screen brightness, to reduce power consumption of an intelligent terminal.

The following describes embodiments of this application with reference to the accompanying drawings.

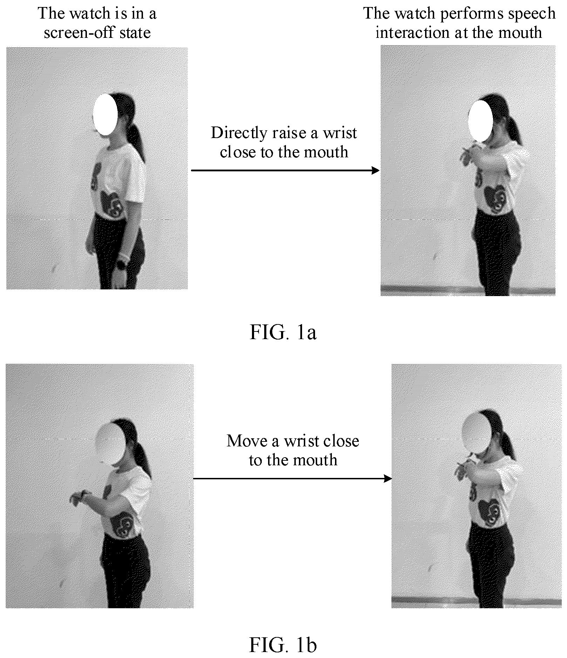

FIG. 1a is a diagram of an application scenario of a speech interaction method according to an embodiment of this application. As shown in FIG. 1a, when a wrist wearable device is in a screen-off state, a user directly and naturally moves a wrist close to lips, and
the user speaks out a speech task. A microphone of the wrist wearable device collects an audio signal of the user, and a voice assistant of the wrist wearable device recognizes the speech task based on the audio signal, and responds to the speech task.

FIG. 1b is a diagram of an application scenario of another speech interaction method according to an embodiment of this application. As shown in FIG. 1b, when a wrist wearable device is in a screen-on state, for example, a user reads information on a screen of the wrist wearable device or a user is operating the wrist wearable device, the user raises a wrist, so that lips of the user face the screen of the wrist wearable device and are close to the wrist wearable device, and then the user speaks out a speech task, for example, "Today's weather". The wrist wearable device collects an audio signal of the user, and a voice assistant of the wrist wearable device recognizes the speech task based on the audio signal, and responds to the speech task. For example, the wrist wearable device outputs "It is sunny today".

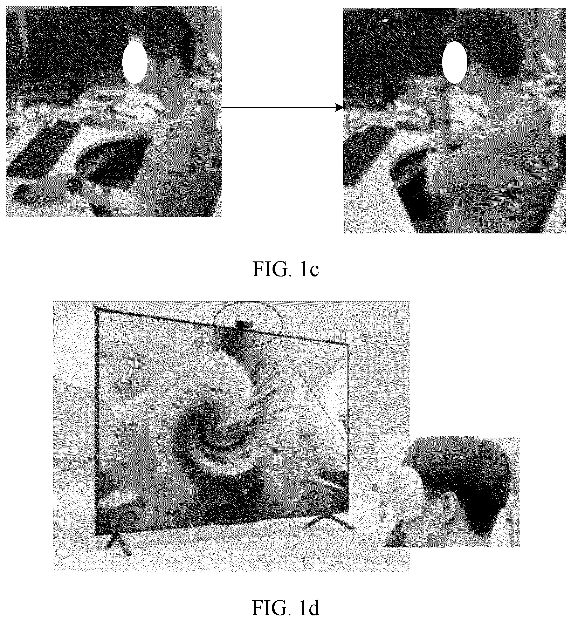

FIG. 1c is a diagram of an application scenario of another speech interaction method according to an embodiment of this application. As shown in FIG. 1c, when a mobile phone is screen off, a user presses a power button of the mobile phone to turn on a screen of the mobile phone, picks up the mobile phone from a desktop, and puts a bottom of the mobile phone close to the mouth, and then the user speaks out a speech task. The mobile phone collects an audio signal of the user, and a voice assistant of the mobile phone recognizes the speech task based on the audio signal, and responds to the speech task.

FIG. 1d is a diagram of an application scenario of a speech interaction method according to an embodiment of this application. As shown in FIG. 1d, a face of a user faces a large-screen device. The user may face a large screen with a front face, or may face a large screen by deflecting to the left by a preset angle or deflecting to the right by a preset angle, and then the user speaks out a speech task, for example, "Today's weather". The wrist wearable device collects an audio signal of the user, recognizes the speech task based on the audio signal, and responds to the speech task. For example, the wrist wearable device outputs "It is sunny today".

It should be understood that the speech interaction method in this application is applied to not only the foregoing four scenarios, but also another scenario. This is not limited herein.

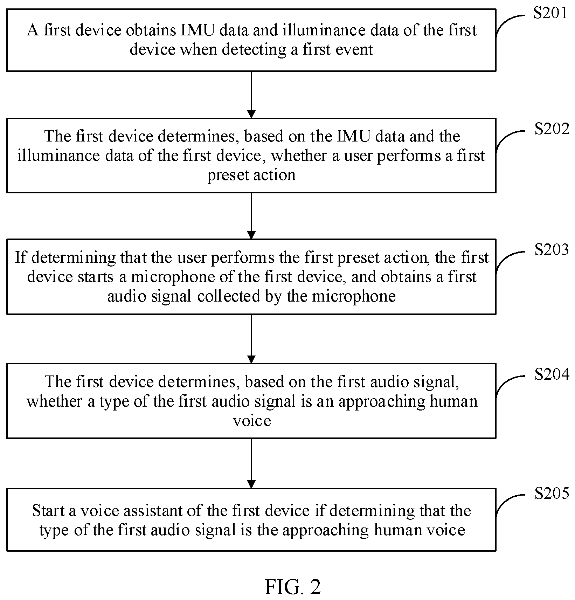

FIG. 2 is a schematic flowchart of a speech interaction method according to an embodiment of this application. As shown in FIG. 2, the method includes the following steps.

S201: A first device obtains IMU data and illuminance data of the first device when detecting a first event.

It should be understood that the first device may be a wrist wearable device of a user or a user terminal device, and the user terminal device may be a smartphone, a tablet computer, or the like.

The first event is a wrist raising hardware interrupt event of the first device, a hand raising hardware interrupt event of the first device, a press-to-wake event of the first device, a hand-raise-to-wake event of the first device, or a wrist-raise-to-wake event of the first device.

The wrist raising hardware interrupt event and the hand raising hardware interrupt event of the first device indicate low-power basic wrist raising detection implemented in an IMU component. Once a wrist raising or wrist rotation behavior of a small degree is detected (for example, on the basis of acceleration data collected by an IMU of the first device, if an acceleration exceeds more than 30% of a gravity acceleration (9.8 m/s^2), it is determined that the behavior is the wrist raising behavior, the wrist rotation behavior, or a hand raising behavior), the IMU of the first device generates a hand raising hardware interrupt or a wrist raising hardware interrupt. The interrupt event may be subscribed to by another software module, to trigger other software to start running, for example, start wrist-raise-to-wake software to detect a wrist raising or wrist rotation behavior again, to implement an accurate and reliable wrist-raise-to-wake function (for example, to achieve a highest success rate and a lowest false triggering rate).

The press-to-wake event of the first device indicates that the first device generates the press-to-wake event when detecting an operation performed by the user on a button (for example, a power button, a volume button +, or a volume button -) of the first device. The event may be subscribed to by another software module, to trigger other software to start running, for example, rendering software to start interface rendering calculation, and then submits generated image information to a screen for display. It should be understood that generating the press-to-wake event of the first device indicates that the first device determines that a condition for waking up a screen of the first device is met. In this case, the first device has not controlled waking up the screen of the first device.

The wrist-raise-to-wake event or the hand raising event of the first device indicates that the first device detects a wrist raising event or a hand raising event through which the user attempts to wake up the screen, where the wrist raising event or the hand raising event may be determined by the first device based on the IMU data collected by the IMU. It should be understood that generating the wrist-raise-to-wake event or the hand-raise-to-wake event of the first device indicates that the first device determines that a condition for waking up the screen of the first device is met. In this case, the first device has not controlled waking up the screen of the first device. It should be understood that, that the first device detects the wrist raising event or the hand raising event through which the user attempts to wake up the screen is that wrist-raise-to-wake or hand-raise-to-wake software of the first device detects the wrist raising event or the hand raising event through which the user attempts to wake up the screen.

It should be noted herein that the first event may be triggered by the user by mistake or the first device detects the corresponding first event for another purpose of the user. For example, when a user swings an arm, IMU data of a wrist wearable device also changes, and a wrist raising hardware interrupt event or a wrist-raise-to-wake event may be triggered, but the user does not want to perform speech interaction with the wrist wearable device by raising the wrist. For another example, in a process in which a user holds a mobile phone for running, IMU data of the mobile phone changes, and a hand raising interrupt event or a hand-raise-to-wake event may be triggered. For another example, if a user wants to use an application on a smartphone, the user may wake up a screen of the smartphone via a power button of the smartphone, and a hand-raise-to-wake event of the mobile phone is triggered, but the user does not want to perform speech interaction with the mobile phone by raising a hand.

To avoid the foregoing false triggering, when detecting the first event, the first device obtains the IMU data and the illuminance data of the first device, and determines, based on the IMU data and the illuminance data of the first device, whether the user performs a first preset action.

In an example, when the first event is the press-to-wake event of the first device, that the first device obtains the IMU data and the (ambient) illuminance data of the first device includes: The first device starts an ambient light sensor to collect the illuminance data, and starts the IMU to collect the IMU data; and obtains the collected illuminance data and IMU data, where collection duration of the illuminance data is the same as collection duration of the IMU data.

It should be understood that, before the IMU data is collected, the IMU needs to be started if the IMU is not started; or if an accelerometer in the IMU is started but an angle meter is not started, the angle meter for the IMU data needs to be started before angle data needs to be collected. If the ambient light sensor is not started before the illuminance data is collected, the ambient light sensor needs to be started.

In another example, when the first event is the wrist raising hardware interrupt event of the first device, the hand raising hardware interrupt event of the first device, the wrist-raise-to-wake event of the first device, or the hand-raise-to-wake event of the first device, that the first device obtains the IMU data and the illuminance data of the first device includes:
The first device starts an ambient light sensor of the first device, collects the (ambient) illuminance data of the first device, continues to collect the IMU data, obtains buffered IMU data related to the first event, and performs zero padding on illuminance data related to the first event (because the ambient light sensor has not been started during the first event), where zero setting is performed due to low illuminance of lower space.

It should be understood that the wrist raising hardware interrupt event of the first device, the hand raising hardware interrupt event of the first device, the wrist-raise-to-wake event of the first device, or the hand-raise-to-wake event of the first device is detected based on the IMU data of the first device. In other words, before the wrist raising hardware interrupt event of the first device, the hand raising hardware interrupt event of the first device, the wrist-raise-to-wake event of the first device, or the hand-raise-to-wake event of the first device is detected, the IMU of the first device is started and the IMU data is collected. Therefore, the IMU data for determining whether the user performs the first preset action may be considered as two parts. One part is collected before the first event is detected, and this part of data may be referred to as IMU data related to the first event; and collection of the other part starts when the first event is detected. The two parts of the IMU data are IMU data for complete wrist raising or hand raising. Whether the user performs the first preset action can be more accurately determined based on the IMU data for complete wrist raising or hand raising.

Because the collection duration of the illuminance data for determining whether the user performs the first preset action needs to be equal to the collection duration of the IMU data, before the illuminance data and the IMU data are used to determine whether the user performs the first preset action, zero padding is performed on the illuminance data, where data obtained by performing zero padding is the illuminance data related to the first event. Equivalent duration of the illuminance data obtained by performing zero padding is equal to the collection duration of the IMU data. The collection duration of the IMU data is first preset duration.

It should be understood that a sensor may collect a specific amount of data after operating for a period of time, and an amount of data may be represented based on duration. The equivalent duration herein represents a value of the data amount.

S202: The first device determines, based on the IMU data and the illuminance data of the first device, whether the user performs the first preset action.

The first preset action may be a wrist raising action or a hand raising action.

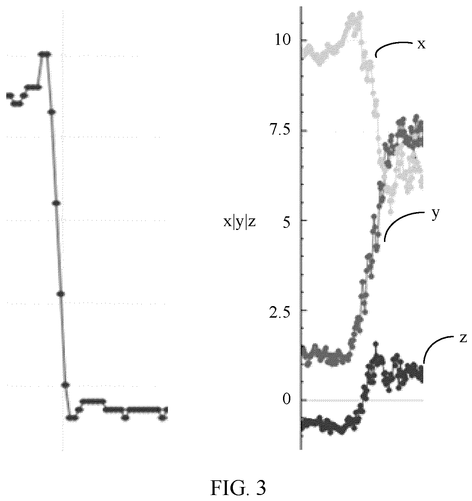

Refer to FIG. 1a and FIG. 1b. It should be understood that, in a process in which the user raises the wrist to move the wrist wearable device close to the lips, because light in upper space is stronger than light in lower space and light entering the ambient light sensor below the screen is blocked when the lips of the user are close to and face the screen of the wrist wearable device, the illuminance data collected by the ambient light sensor is changed as a curve in a left figure in FIG. 3. Illuminance values collected by the ambient light sensor first increase and then decrease significantly, and then are stable at a low value. Refer to FIG. 1a and FIG. 1b. In the process in which the user raises the wrist to move the wrist wearable device close to the lips, as the wrist of the user moves, the wrist wearable device generates specific posture motion (for example, a tilt angle between a watch face and a horizontal plane changes, so that the watch face faces the lips of the user) and location motion (for example, ascent from the lower space to the upper space, a distance from the wrist wearable device to a vertical plane of the user body is reduced). Correspondingly, accelerations are changed as a curve in a right figure in FIG. 3. Similarly, for a handheld device (for example, a mobile phone), in a process in which the user picks up the handheld device and raises a hand, so that the handheld device is close to the lips of the user, illuminance values collected by an ambient light sensor of the handheld device also tend to increase. However, light entering the ambient light sensor below the handheld device is not blocked after the handheld device is close to the lips of the user. Therefore, illuminance values collected by the ambient light sensor below the handheld device do not significantly decrease. As the hand of the user moves, the handheld device also generates specific posture motion (for example, a tilt angle between a screen of the mobile phone and a horizontal plane becomes close to zero degrees, so that a microphone at a bottom of the mobile phone faces the lips of the user) and location motion.

The right figure in FIG. 3 is a diagram of accelerations of the wrist wearable device in an x-axis direction, a y-axis direction, and a z-axis direction in a body coordinate system in the process in which the user raises the wrist to move the wrist wearable device close to the lips. An origin of the body coordinate system is a center of gravity of the wrist wearable device, an x-axis points to a direction of 3 o'clock of the watch face of the wrist wearable device, a y-axis points to a direction of 12 o'clock of the watch face, and a z-axis points right above the watch face.

It can be learned from the foregoing that the first device generates specific posture motion and location motion in a process of being close to the lips of the user. Therefore, whether the user performs the wrist raising action or the hand raising action may be determined based on the illuminance data and the IMU data of the wrist wearable device.

In a possible implementation, a prediction model is pre-trained, to predict whether the user performs the wrist raising action or the hand raising action. The prediction model may be implemented based on a decision tree or a convolutional neural network. Optionally, the wrist wearable device and the handheld device may use a same prediction model for prediction, or may use different prediction models for prediction.

Training data includes acceleration data whose collection duration is fixed duration (for example, 0.5s) and illuminance data whose collection duration is fixed duration (for example, 0.5s), and derivative data of the acceleration data and the illuminance data, for example, a maximum value, an average value, skewness, kurtosis, and a histogram of the acceleration data, a moving average value sequence generated based on a specific window size, and an amplitude value sequence of an acceleration vector. Optionally, the training data is collected for users of different groups, including an elderly group and a teenager group, a male group and a female group, and/or a left-hand wearing/holding group and a right-hand wearing/holding group. The illuminance data in the training data may also include data collected in different environments, including an outdoor sunny environment, an indoor normal lighting environment, and a dark environment.

In an example, the first device inputs the IMU data and the illuminance data into a first prediction model for prediction, to obtain a first prediction result. For example, the first prediction result is the wrist raising action. The first prediction model may be a four-class classification network. The first device inputs the IMU data and the illuminance data into the first prediction model for prediction, and the first prediction model outputs four probabilities: a probability of the wrist raising action, a probability of a wrist lowering action, a probability of a wrist raising keeping action, and a probability of a free hand action. The first prediction result is an action corresponding to a maximum probability, for example, the wrist raising action. The free hand action herein is an action other than the wrist raising action, the wrist lowering action, and the wrist raising keeping action. Alternatively, the first prediction model may be a binary classification network. The first device inputs the IMU data and the illuminance data into the first prediction model for prediction, and the first prediction model outputs two probabilities: a probability of the wrist raising action and a probability of another action. The first prediction result is an action corresponding to a maximum probability, and the another action herein is an action other than the wrist raising action.

It should be understood that the wrist raising keeping action indicates that after the user raises the wrist, the wrist keeps a specific posture within a period of time (for example, the watch face faces the user, a pitch angle between the watch face and the horizontal plane is within ±15 degrees, and a roll angle is 30 to 60 degrees), and illuminance keeps stable (for example, a multiple of a maximum illuminance value is less than 2/a multiple of a minimum illuminance value is less than 2) and does not drop. If the IMU data and the illuminance data that are collected after the user raises the wrist fall within a preset range, the first device determines that the user performs the wrist raising keeping action.

In another example, the first device inputs the IMU data and the illuminance data into a second prediction model for prediction, to obtain a second prediction result. For example, the second prediction result is the hand raising action. The second prediction model may be a four-class classification network. The first device inputs the IMU data and the illuminance data into the second prediction model for prediction, and the second prediction model outputs four probabilities: a probability of the hand raising action, a probability of an arm lowering action, a probability of a hand raising keeping action, and a probability of a free hand action. The second prediction result is an action corresponding to a maximum probability, for example, the hand raising action. The free hand action herein is an action other than the hand raising action, the arm lowering action, and the hand raising keeping action. Alternatively, the second prediction model may be a binary classification network. The first device inputs the IMU data and the illuminance data into the second prediction model for prediction, and the second prediction model outputs two probabilities: a probability of the hand raising action and a probability of another action. The second prediction result is an action corresponding to a maximum probability, and the another action herein is an action other than the hand raising action.

For training data of both the first prediction model and the second prediction model, refer to the foregoing related descriptions. Details are not described herein again.

S203: If determining that the user performs the first preset action, the first device starts a microphone of the first device, and obtains a first audio signal collected by the microphone.

The first audio signal is collected by a plurality of microphones of the first device. In other words, if determining that the user performs the first preset action, the first device starts a plurality of microphones of the first device, for example, including a primary microphone and a secondary microphone. Wind noise exists in an audio signal collected by a single microphone, and if a voice type of the audio signal is predicted based on the audio signal collected by the single microphone, there is low accuracy. The plurality of microphones of the first device collect the first audio signal, then a voice type of the audio signal is predicted based on the audio signals collected by the plurality of microphones, and this can obtain a prediction result with high accuracy.

For the audio signals collected by the plurality of microphones, wind noise may exist in both the audio signal collected by the primary microphone and the audio signal collected by the secondary microphone, but wind noise strengths in the audio signals collected by the primary microphone and the secondary microphone are different. The first device may perform wind noise reduction processing on the wind noise in the other audio signal by using the wind noise in one audio signal, for example, perform wind noise reduction processing, by using the wind noise in the audio signal collected by the secondary microphone, on the wind noise in the audio signal collected by the primary microphone, and then a voice type of an audio signal obtained after wind noise reduction processing is performed is predicted. This can obtain a more accurate prediction result.

After the microphone of the first device collects the first audio signal, the first audio signal is transmitted to a DSP of the first device. The DSP implements basic voice activity detection (voice activity detection, VAD) in hardware. When energy of the first audio signal exceeds a preset energy threshold, the DSP of the first device generates a hardware VAD interrupt, and triggers a software algorithm in the DSP to run, that is, determines whether the type of the first audio signal is an approaching human voice.

S204: The first device determines, based on the first audio signal, whether the type of the first audio signal is the approaching human voice.

In an example, the first device inputs the first audio signal to a third prediction model for prediction, and may obtain a third prediction result. For example, the third prediction result is the approaching human voice. The third prediction model may be a four-class classification network. The first device inputs the first audio signal into the first prediction model for prediction, and the third prediction model outputs four probabilities: a probability of the approaching human voice, a probability of a nearby human voice, a probability of a distant human voice, and a probability of a non-human voice. The third prediction result is a voice type corresponding to a maximum probability, for example, the approaching human voice. Alternatively, the third prediction model may be a binary classification network. The first device inputs the first audio signal into the third prediction model for prediction, and the third prediction model outputs two probabilities: a probability of the approaching human voice and a probability of not an approaching human voice. The third prediction result is a voice type corresponding to a maximum probability.

Specifically, the first device performs feature extraction on the first audio signal by using the third prediction model, to obtain an audio feature of the first audio signal. Optionally, the audio feature includes at least one of an energy feature, a time domain feature, a frequency domain feature, a music theory feature, and a perceptual feature.

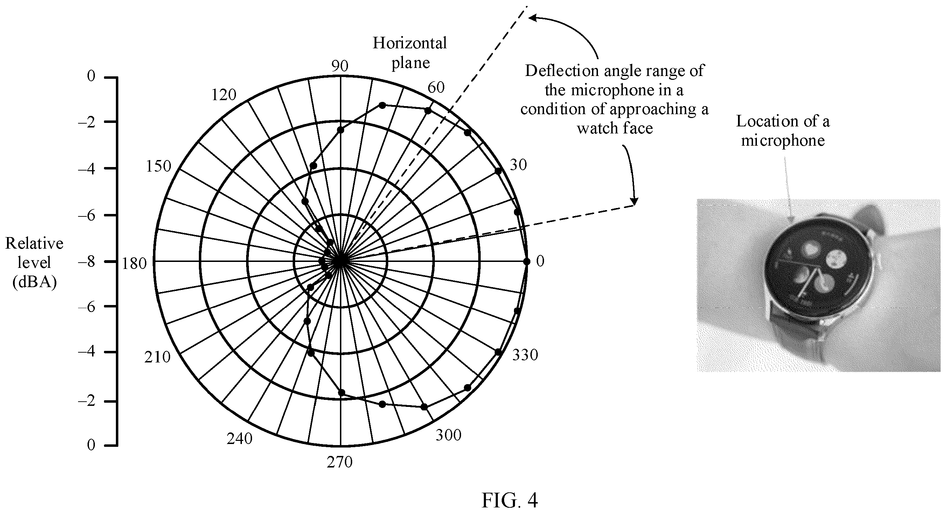

A policy for extracting the audio feature is set based on a device scenario and a user scenario. Specifically, in a scenario in which the user raises the wrist to move the wrist wearable device close to the mouth to speak out the speech task, that a voice of a person has high and low frequency distribution characteristics after leaving the mouth is considered (that is, energy attenuation of audio signals in a deflection direction in which the lips are facing is shown in FIG. 4, and energy attenuation of an audio signal behind the brain of the user is the largest, where a higher frequency indicates greater attenuation; and when the lips are close to the wrist wearable device, for example, when the lips are 3 cm to 5 cm away from a screen of the wrist wearable device, the microphone of the wrist wearable device is deflected from 15 degrees to 55 degrees). When the lips are close to the screen, a specific reflection reverberation feature is generated, and the microphone of the wrist wearable device is located at an edge of the wrist wearable device (for example, at a direction of the 11 o'clock). Generally, a voice is lowered when the user speaks close to the wrist wearable device. A specific preset policy may be a high low band ratio (high low band ratio, HLBR) feature, for example, 4 coefficients fitted by a 128-point fast Fourier transform (fast Fourier transform, FFT) third-order polynomial and 2 coefficients fitted by linear regression in a high low band energy ratio bounded by (a linear frequency or a Mel scale frequency) 1 kHz, a reverberation feature (for example, a ratio of a maximum autocorrelation peak to an average value of other peaks within a range from -10 ms to +10 ms, a ratio of a maximum autocorrelation peak to an average value of next 9 peaks, an autocorrelation standard deviation and an area under a curve, an absolute first-order lead autocorrelation standard deviation and an area under a curve, or a speech-to-reverberation modulation energy ratio (speech-to-reverberation modulation energy ratio, SRMR)), and a whispering feature (such as pitch and timbre). When DSP running content and computing resources permit, the specific preset policy may include a feature obtained by changing a quantized feature scale inspired by human ear auditory cognition, for example, 84 Mel-frequency cepstral coefficients (Mel-Frequency Cepstral Coefficients, MFCCs).

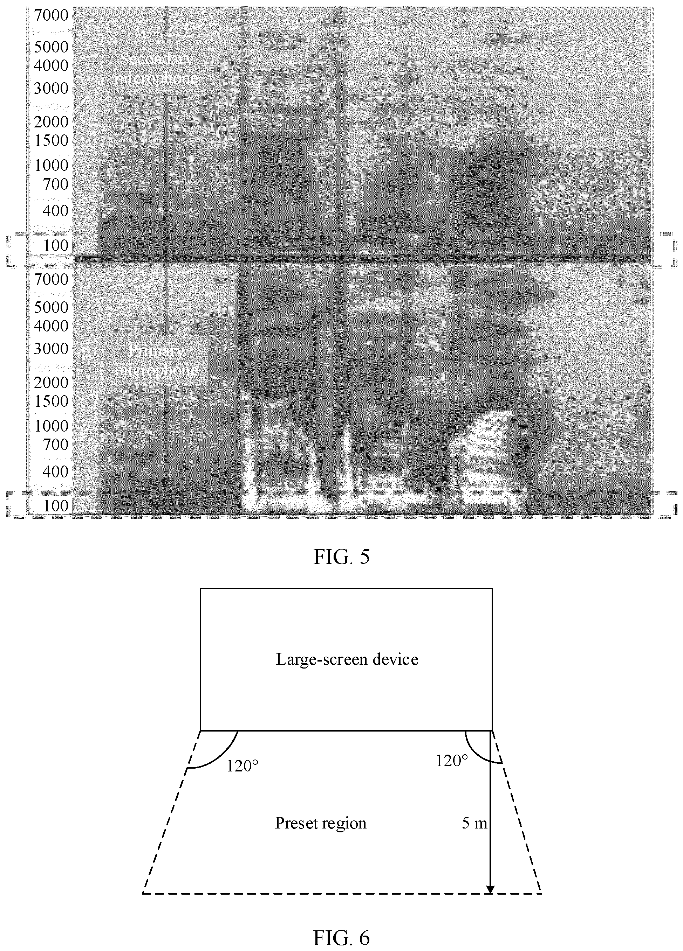

In a scenario in which a user raises a hand to move a handheld device close to the mouth to speak out a speech task, obvious plosive popping exists when the handheld device is close to the mouth of the user for 3 cm to 5 cm. As shown in FIG. 5, for the plosive popping, a primary microphone of the handheld device may collect strong low-frequency breath wind noise. In addition, for motion wind noise or ambient wind noise, the primary microphone and a secondary microphone may collect strong low-frequency wind noise. In this case, a specific preset policy may be HLBR features of the primary microphone and the secondary microphone, for example, 4 coefficients fitted by a 128-point FFT third-order polynomial and 2 coefficients fitted by linear regression in a high low band energy ratio bounded by (a linear frequency or a Mel scale frequency) 200 Hz, or two-channel MFCCs.

That the first device extracts an audio feature set value of a collected audio signal according to the preset policy is specifically performing calculation on collected audio data according to the preset policy, to generate specific data of each audio feature. For example, a method of calculating values of MFCCs is as follows:
The collected audio signal is divided into frames, where generally, 25 ms is a frame, and frame overlap is 10 ms; a power spectrum of each frame of audio signal is estimated by using a periodogram method; an estimated power spectrum is filtered by using 85 Mel filters, and energy in each filter is calculated; a log logarithm is obtained in energy in each filter, to obtain 85 logarithm results; and discrete cosine transform (discrete cosine transform, DCT) is performed on the 85 logarithm results. 2^{nd} to 85^{th} coefficients on which DCT is performed are finally retained, a 1^{st} coefficient is removed, and finally 84 coefficients are obtained, where the 84 coefficients are 84 Mel-frequency cepstral coefficients.

In a possible embodiment, the third prediction model may be obtained in the following method:
Audio signals sent by users when a specific quantity of lips that are collected by the wrist wearable device or the handheld device approach the wrist wearable device or the handheld device, and an audio signal corresponding to a voice of a person near or far away from the wrist wearable device or the handheld device are obtained; audio feature set values of the collected audio signals are extracted according to the preset policy; and a machine learning model or a convolutional neural network is trained by using the audio feature set values as training samples, to obtain the third prediction model.

The machine learning model may be a decision tree, a random forest algorithm, XGBoost, or AdaBoost.

Duration of the first audio signal is less than or equal to 0.5s. For example, the duration of the first audio signal may be 0.25s, 0.3s, 0.4s, and 0.5s.

The duration of the first audio signal is set to be less than or equal to 0.5s, so that a text corresponding to the first audio signal can be echoed in real time when the voice assistant is subsequently started to recognize a first speech signal.

Determining, based on the first audio signal, whether the type of the first audio signal is the approaching human voice is implemented in the DSP of the first device. In addition, the first audio signal is an audio signal on which AGC, noise reduction, dereverberation, or compression processing is not performed, without loss of information of the approaching human voice, and the voice type of the first audio signal is determined by using the original audio signal on which AGC, noise reduction, dereverberation, or compression processing is not performed. This can improve precision of the determined voice type of the first audio signal.

It should be understood that audio signals corresponding to a complete speech task include not only the first audio signal, but also an audio signal following the first audio signal. The microphone collects the audio signals periodically based on collection duration less than or equal to 0.5s.

S205: Start the voice assistant of the first device if determining that the type of the first audio signal is the approaching human voice.

It should be understood that, after determining the type of the first audio signal, the microphone of the first device continuously collects an audio signal, extracts an audio feature set value of the collected audio signal, and determines a type of the collected audio signal based on the audio feature set value of the collected audio signal at a preset time interval. The preset time interval may be 0.1s, 0.2s, or other time.

In a feasible implementation, after starting the microphone of the first device, the first device controls the IMU and the ambient light sensor of the first device to continue collecting IMU data and illuminance data. Optionally, the collection duration is second preset duration. The first device determines, based on the continuously collected IMU data and illuminance data, whether the user performs a second preset action; and if determining that the type of the first audio signal is the approaching human voice and that the user performs the second preset action, the first device starts the voice assistant. If determining that the user does not perform the second preset action, the first device turns off the microphone of the first device.

The second preset action may be a wrist raising keeping action or a hand raising keeping action. In an example, if the wrist raising action or the hand raising action of the user keeps for third preset duration, the first device starts the voice assistant. Optionally, the third preset duration may be 0.3s.

In an example, when determining whether the user keeps the wrist raising action, the first device inputs the continuously collected IMU data and illuminance data into a fourth prediction model for prediction, to obtain a fourth prediction result. For example, the fourth prediction result is the wrist raising keeping action. The fourth prediction model may be a four-class classification network. The first device inputs the continuously collected IMU data and illuminance data into the fourth prediction model for prediction, and the fourth prediction model outputs four probabilities: a probability of the wrist raising action, a probability of a wrist lowering action, a probability of the wrist raising keeping action, and a probability of a free hand action. The fourth prediction result is an action corresponding to a maximum probability, for example, the wrist raising keeping action. The free hand action herein is an action other than the wrist raising action, the wrist lowering action, and the wrist raising keeping action. Alternatively, the fourth prediction model may be a binary classification network. The first device inputs the continuously collected IMU data and illuminance data into the fourth prediction model for prediction, and the fourth prediction model outputs two probabilities: a probability of the wrist raising keeping action and a probability of another action. The fourth prediction result is an action corresponding to a maximum probability. The another action herein is an action other than the wrist raising keeping action.

In another example, when determining whether the user keeps the hand raising action, the first device inputs the continuously collected IMU data and illuminance data into a fifth prediction model for prediction, to obtain a fifth prediction result. For example, the fifth prediction result is the hand raising keeping action. The fifth prediction model may be a four-class classification network. The first device inputs the IMU data and illuminance data into the fifth prediction model for prediction, and the fifth prediction model outputs four probabilities: a probability of the hand raising action, a probability of an arm lowering action, a probability of the hand raising keeping action, and a probability of a free hand action. The fifth prediction result is an action corresponding to a maximum probability, for example, the hand raising keeping action. The free hand action herein is an action other than the hand raising action, the arm lowering action, and the hand raising keeping action. Alternatively, the fifth prediction model may be a binary classification network. The first device inputs the continuously collected IMU data and illuminance data into the fifth prediction model for prediction, and the fifth prediction model outputs two probabilities: a probability of the hand raising keeping action and a probability of another action. The fifth prediction result is an action corresponding to a maximum probability. The another action herein is an action other than the hand raising keeping action.

It should be noted herein that the fourth prediction model and the first prediction model may be a same prediction model. When the fourth prediction model and the first prediction model are the same prediction model, collection duration of the IMU data and the illuminance data that are used to determine whether the user performs the second preset action needs to be equal to collection duration of the IMU data and the illuminance data that are used to determine whether the user performs the first preset action. In other words, the second preset duration needs to be equal to the first preset duration. When the second preset duration is less than the first preset duration, before determining, by using the continuously collected IMU data and illuminance data, whether the user performs the second preset action, the first device separately performs interpolation processing on the continuously collected IMU data and illuminance data, so that equivalent duration of the IMU data and the illuminance data that are used to determine whether the user performs the second preset action is equal to the collection duration of the IMU data and the illuminance data that are used to determine whether the user performs the first preset action, and may further use the same prediction model for prediction.

Similarly, the fifth prediction model and the second prediction model may be a same prediction model. When the fifth prediction model and the second prediction model are the same prediction model, and the second preset duration is less than the first preset duration, before determining, by using the continuously collected IMU data and illuminance data, whether the user performs the second preset action, the first device separately performs interpolation processing on the continuously collected IMU data and illuminance data, so that equivalent duration of the IMU data and the illuminance data that are used to determine whether the user performs the second preset action is equal to the collection duration of the IMU data and the illuminance data that are used to determine whether the user performs the first preset action, and may further use the same prediction model for prediction.

It should be understood that a sensor may collect a specific amount of data after operating for a period of time, and an amount of data may be represented by using duration. The equivalent duration herein represents a value of the data amount.

It should be noted that a process of predicting, by using the prediction model, whether the user performs the first preset action or the second preset action is merely an example, and is not intended to limit this application. Certainly, whether the user performs the first preset action or the second preset action may be predicted in another manner.

After starting the voice assistant, the first device determines a to-be-executed task based on an audio signal collected by the microphone of the first device, and recognizes a type of the to-be-processed task. If the to-be-processed task is a sensitive task, to ensure security, the first device needs to obtain identity information of the user, for example, fingerprint information, voiceprint information, and facial image information of the user; and determines the user as a target user based on the obtained identity information of the user, and executes the to-be-processed task.

The sensitive task may be a transfer task, a private folder opening task, or the like. The target user is an owner of the first device.

In an example, a current user of the first device speaks "transfer 50 yuan to xx" to the first device, the microphone of the first device collects a corresponding audio signal, and the first device determines, based on the audio signal, a to-be-processed task: transfer money to xx, where an amount is 50 yuan. The first device determines that the to-be-processed task is a sensitive task, obtains voiceprint information of the current user of the first device, and matches the voiceprint information of the current user with voiceprint information, of an owner of the first device, that is prestored in the first device. If the matching succeeds, it is determined that the user of the first device is the owner of the first device, and the first device executes the to-be-processed task: transfer money to xx, where the amount is 50 yuan. If the matching fails, it indicates that the user of the first device is not the owner of the first device, and the first device does not execute the to-be-processed task.

In a possible embodiment, after the voice assistant of the first device recognizes a task corresponding to the first audio signal, the first device determines, before executing the task, whether identity authentication needs to be performed. If the identity authentication needs to be performed, the first device sends prompt information to the user, for example, the prompt information is "Please unlock the screen with a face or a fingerprint first". The first device obtains the identity information of the user, for example, facial information or fingerprint information. After the identity authentication succeeds, (for example, face unlock succeeds or the first device is in a screen unlock state), the first device executes the task corresponding to the first audio signal.

In a possible embodiment, the first device obtains a first confidence level and a second confidence level, where the first confidence level represents duration in which the user keeps the wrist raising action or the hand raising action, and the second confidence level represents a level to which the first audio signal is the approaching human voice; performs weighted summation on the first confidence level and the second confidence level based on a preset weight, to obtain a confidence level for starting the voice assistant; and if the confidence level for starting the voice assistant is greater than the preset confidence level, starts the voice assistant of the first device.

Optionally, the first device may obtain the first confidence level and the second confidence level in the following manner:
The first device calculates, based on the obtained IMU data, duration in which the user keeps a posture of raising the wrist close to the mouth, or calculates, based on the obtained IMU data, duration in which the user keeps a posture of raising the hand close to the mouth, that is, calculates, based on the obtained IMU data, duration in which the user keeps the wrist raising action or the hand raising action; and then obtains the first confidence level through calculation based on the obtained duration, where longer obtained duration indicates a larger first confidence level. Optionally, a value range of the first confidence level is [0.6, 1.0], that is, the first confidence level corresponding to a lowest value of the obtained duration is 0.6, and the first confidence level corresponding to a highest value of the obtained duration is 1.0. A linear relationship between the obtained duration and the corresponding first confidence level may be determined based on the range. After obtaining the duration, the first device may determine, through calculation and based on the linear relationship, the first confidence level corresponding to the duration.

For the second confidence level, in step S204, the first device uses, as the second confidence level, the probability that is of the approaching human voice and that is output by the third prediction model.

In a possible embodiment, after starting the voice assistant, the first device recognizes, based on an automatic speech recognition (automatic speech recognition, ASR) technology, speech content corresponding to the first audio signal, and displays the speech content corresponding to the first audio signal in real time. For example, the speech content corresponding to the first audio signal is "How is the weather tomorrow", and "tomorrow" is displayed when "tomorrow" is recognized, and "weather" is displayed when "weather" is recognized, rather than displaying after the complete speech content is recognized. Optionally, the first device sends the first audio signal to a server, and the server recognizes, based on the ASR technology, the speech content corresponding to the first audio signal, filters the speech content, and removes, through filtering, a part of content that is not spoken to the voice assistant, for example, "Play ball after work today". That is, the voice assistant of the first device does not provide feedback on content that is not spoken to the voice assistant, and the voice assistant terminates a voice session. This manner can be used to reduce interference to the user.

Some keywords or sentences may be preset for a filtering rule. When determining that the speech content corresponding to the first audio signal includes the preset keyword or sentence, the first device determines that the speech content corresponding to the first audio signal is the content that needs to be removed through filtering, and the voice assistant does not need to provide feedback on the speech content corresponding to the first audio signal.

It should be understood that the first device is the wrist wearable device shown in FIG. 1a and FIG. 1b, or the handheld device shown in FIG. 1c.

It can be learned that, an event in which the user approaches the first device can be more accurately detected based on the IMU data and the illuminance data, rather than detecting the event in which the user approaches the device based only on acceleration data, where the user needs to significantly raise a wrist/hand. The solution in this application provides higher sensitivity, can be used to implement detection when the wrist is raised or the hand is raised naturally, provides the user with a natural speech interaction experience, has a small action amplitude, improves user privacy in a public place, and has an easy operation. The duration of the first audio signal is set to be less than or equal to 0.5s, so that a text corresponding to the first audio signal can be echoed in real time when the voice assistant is subsequently started to recognize the first speech signal. In addition, the first audio signal is an audio signal on which AGC, noise reduction, dereverberation, or compression processing is not performed, without loss of information of the approaching human voice. This can maximize utilization of information in the first audio signal and improve precision of the determined voice type of the first audio signal. The identity authentication needs to be performed before the task corresponding to the audio signal is the sensitive task. The foregoing manner can prevent a non-owner of the first device from executing a security -sensitive speech task on the first device, and ensure information security of a device of the owner of the first device.

In another specific embodiment, the first device collects IMU data of the first device in real time. It should be understood that the IMU data herein includes data such as an acceleration and an angular velocity. The first device determines, based on the IMU data, whether to trigger a first event, that is, whether the first device detects a first event. If the first device determines, based on the IMU data, to trigger the first event, it indicates that the first device detects the first event; or if the first device determines, based on the IMU data, not to trigger the first event, it indicates that the first device does not detect the first event.

The first event is a wrist raising event of the first device, a hand raising event of the first device, or a wrist rotation event of the first device. It should be understood that, certainly, the first event may alternatively be an event other than the wrist raising event of the first device, the hand raising event of the first device, and the wrist rotation event of the first device.

The wrist raising event of the first device indicates that a user raises a hand to place the first device in a location and posture that can be viewed or operated. It should be understood that the first device herein is a handheld device.

The wrist rotation event of the first device indicates that a user directly rotates a wrist inward or first rotates a wrist outward and then rotates the wrist inward, so that the first device is placed in a location and posture that can be viewed or operated. It should be understood that the first device herein is a wrist wearable device.

The wrist raising event of the first device indicates that a user raises a wrist to place the first device in a location and posture that can be viewed or operated. It should be understood that the first device herein is a wrist wearable device.

The location and posture of the first device may be determined by using the IMU data of the first device, and the first device may determine, based on the IMU data of the first device, whether to trigger the first event. In a possible embodiment, the first device may predict, by using an event prediction model, whether the first device triggers the first event. Specifically, the first device inputs the collected IMU data into the event prediction model for processing, and the event prediction model outputs four probability values. The four probability values represent a probability of triggering the wrist raising event of the first device, a probability of triggering the hand raising event of the first device, a probability of triggering the wrist rotation event of the first device, and a probability of not triggering the foregoing event. A maximum probability corresponds to a final output result of the event prediction model.

It should be noted here that, the event prediction model may be used not only in detection of the wrist raising event, detection of the wrist rotation event, and detection of the hand raising event, but also in detection of an event in another application, for example, an event in a raise-to-speak application and an event in a raise-to-wake application. This is not limited herein. Therefore, the event prediction model may be considered as a common capability of the first device.

The first event is detected based on the common capability of the first device, and the first device does not need to separately train a neural network model dedicated to detecting the first event. This reduces workload of the first device, and reduces computing power consumption of the first device.

Because the first device detects the first event based on the common capability of the first device, detecting the first event based on the common capability of the first device cannot indicate that the user performs the first preset action. Therefore, the first device needs to further determine whether the user performs the first preset action.

Specifically, the first device obtains posture information of the first device through calculation based on the IMU data of the first device; obtains acceleration information of the first device from the IMU data of the first device; and if the posture information of the first device is within a preset posture range, the acceleration information of the first device is within a preset acceleration range, and duration of the first event is within a preset duration range, the first device determines that the user performs the first preset action.

The duration of the first event is duration in which the first device keeps, after detecting the first event, placing the first device in the location and posture that can be viewed or operated. The preset posture range, the preset acceleration range, and the preset duration range are all obtained based on historical experience values.

For operations performed by the first device after it is determined whether the user performs the first preset action, refer to related descriptions of S203 to S205. Details are not described herein again.

In another specific embodiment, a second device obtains a second audio signal of a user, and the second device determines information of a location of the user relative to the second device based on the second audio signal; determines, based on the information of the location of the user relative to the second device, whether the user is within a preset range; and if determining that the user is within the preset range, the second device determines that the user approaches the second device is detected, and the second device starts approaching human voice detection. When the second device confirms, through approaching human voice detection, that a type of the third audio signal is an approaching human voice, the second device starts a voice assistant. Collection time of the third audio signal is later than collection time of the second audio signal.

In an example, the second device is a large-screen device. When the user makes a sound near the large-screen device, a plurality of microphones (for example, more than three microphones) of the large-screen device all can receive audio data of the user. The second device processes, based on an audio time difference of arrival (time difference of arrival, TDOA) technology, audio signals collected by the plurality of microphones, to obtain the information of the location of the user relative to the second device. The second device determines, based on the information of the location of the user relative to the second device, whether the user is within the preset range. For example, a preset region is shown in FIG. 6. The preset region is an inverted trapezoidal region 5 meters in front of the large-screen device, and left and right angles of a lower part of a trapezium are 120°. When determining that the user is in the preset region, the second device determines to start approaching human voice detection.

In a possible embodiment, after the second device starts approaching human voice detection, the second device continuously detects a behavior in which the user keeps close to the second device. Specifically, the second device continuously obtains an audio signal of the user, and determines, based on the obtained audio signal, whether the user is still in the preset region; and if determining, based on the obtained audio signal, that the user is not in the preset region, the second device terminates approaching human voice detection.

Optionally, to improve a speech task response speed, the second device determines, based on the audio signal whose collection duration is short, whether the user is in the preset region. The short collection duration indicates that the collection duration is not greater than preset collection duration, and the preset collection duration may be 0.1s, 0.2s, 0.5s, or other duration.

Optionally, approaching human voice detection and device approaching detection may be performed simultaneously. Device approaching detection is to determine, based on the obtained audio signal, whether the user is within the preset range.

In a possible embodiment, a specific process of approaching human voice detection includes the following steps.

The second device obtains a video stream when the user speaks out a speech task to the second device, and simultaneously obtains a corresponding audio signal when the user speaks out the speech task to the second device, where the audio signal may be referred to as the third audio signal. The second device determines audio feature information based on the video stream and the third audio signal, where the audio feature information includes a correlation coefficient between a speech and lip motion, and/or a speech-lip motion inter-video delay. The second device determines a type of the third audio signal based on the audio feature information. If the determined type of the third audio signal is the approaching human voice, the second device starts the voice assistant.

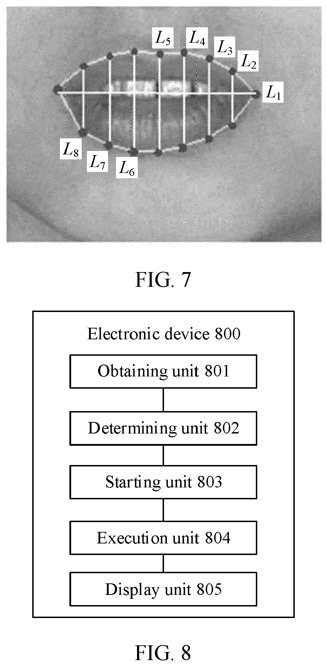

The correlation coefficient between the speech and the lip motion is cross-correlation coefficients between an amplitude of the third audio signal and each of a lip height and a lip width of the user in the video stream, for example, Pearson correlation coefficients. A value range of the correlation coefficient is [0, 1], where 1 indicates strong correlation, and 0 indicates no correlation. As shown in FIG. 7, L₁ represents the lip width, and L₂, L₃, L₄, L₅, L₆, L₇, and L₈ represent lip heights. Because a voice propagation speed is slower than a speed of light, there is a delay in arrival time of a speech signal relative to arrival time of a video signal. Therefore, when the cross-correlation coefficients between the audio amplitude of the third audio signal and each of the lip height and the lip width are calculated, the third audio signal needs to be shifted right on a time axis, to implement synchronization between the third audio signal and a video. When synchronization is implemented, a maximum value of the cross-correlation coefficients between the audio amplitude of the third audio signal and each of the lip height and the lip width may be selected as a representation of correlation between the speech and the lip motion. That is, a maximum value of the cross-correlation coefficients between the audio amplitude of the third audio signal and each of the lip height and the lip width is used as the correlation coefficient between the speech and the lip motion, and a length shifted right on the time axis may be used as the speech-lip motion inter-video delay.

In a possible embodiment, that the second device determines the type of the third audio signal based on the audio feature information may be that the second device inputs the audio feature information into a sixth prediction model for processing, to obtain the type of the third audio signal. The sixth prediction model may be a four-class classification network. The second device inputs the audio feature information into the sixth prediction model for prediction, and the sixth prediction model outputs four probabilities: a probability of the approaching human voice, a probability of a nearby human voice, a probability of a distant human voice, and a probability of a non-human voice. The type of the third audio signal is a voice type corresponding to a maximum probability, for example, the approaching human voice. Alternatively, the sixth prediction model may be a binary classification network. The second device inputs the audio feature information into the sixth prediction model for prediction, and the sixth prediction model outputs two probabilities: a probability of the approaching human voice and a probability of not an approaching human voice. The type of the third audio signal is a voice type corresponding to a maximum probability.

It should be understood that, before using the sixth prediction model, the second device may obtain the sixth prediction model. The sixth prediction model may be obtained from another device after being trained by the another device, or may be obtained by the second device through training.

In an instance, a process of obtaining the sixth prediction model through training specifically includes the following steps.

Audio signals collected by the second device when a specific quantity of users approach and face a screen of the second device and speak out a speech task, a human voice audio signal/non-human voice audio signal that does/do not face the screen of the second device, and corresponding video data are obtained. Corresponding audio feature information is obtained in the foregoing manner. Then, the obtained audio feature information is used as a training sample to train a machine learning model or a convolutional neural network, to obtain the sixth prediction model.

The machine learning model may be a decision tree, a random forest algorithm, XGBoost, or AdaBoost.

In a possible embodiment, the voice assistant is started when it is determined that the type of the third audio signal is the approaching human voice, and the user approaches the second device for preset duration, for example, 0.3s. This manner can avoid that the user falsely triggers to start the voice assistant.

After starting the voice assistant, the second device determines a to-be-executed task based on the third audio signal, and recognizes a type of the to-be-processed task; if the to-be-processed task is a sensitive task, to ensure security, needs to obtain identity information of the user, for example, fingerprint information, voiceprint information, and facial image information of the user; and determines the user as a target user based on the obtained identity information of the user, and executes the to-be-processed task.

In a possible embodiment, after starting the voice assistant, the second device recognizes, based on an ASR technology, speech content corresponding to the third audio signal, and displays the speech content corresponding to the third audio signal in real time. For example, the speech content corresponding to the third audio signal is "How is the weather tomorrow", and "tomorrow" is displayed when "tomorrow" is recognized, and "weather" is displayed when "weather" is recognized, rather than displaying after the complete speech content is recognized. Optionally, the second device sends the third audio signal to a server, and the server recognizes, based on an ASR technology, speech content corresponding to the third audio signal, filters the speech content, and removes, through filtering, a part of content that is not spoken to the voice assistant, for example, "Play ball after work today". That is, the voice assistant of the second device does not provide feedback on content that is not spoken to the voice assistant, and the voice assistant terminates a voice session. This manner can be used to reduce interference to the user.

Some keywords or sentences may be preset for a filtering rule. When determining that the speech content corresponding to the third audio signal includes the preset keyword or sentence, the second device determines that the speech content corresponding to the third audio signal is the content that needs to be removed through filtering, and the voice assistant does not need to provide feedback on the speech content corresponding to the third audio signal.

It can be learned that, detection of the user approaching the device is implemented through detection of a location of a sound source by using a plurality of microphones of the large-screen device, rather than triggering a microphone by using a wake-up word to pick up a speech task of the user, providing a natural speech interaction experience (approaching a direction to speak) for the user, and has an easy operation. Lip motion information is obtained by using a camera of the large-screen device, and then the correlation between the speech and the lip motion is calculated. This can intercept a human voice and a non-human voice near the device that are not facing a large screen, and suppress user interference caused by falsely waking up the voice assistant. The identity authentication needs to be performed before the task corresponding to the audio signal is the sensitive task. The foregoing manner can prevent a non-owner of the second device from executing a security-sensitive speech task on the second device, and ensure information security of a device of the owner of the second device.

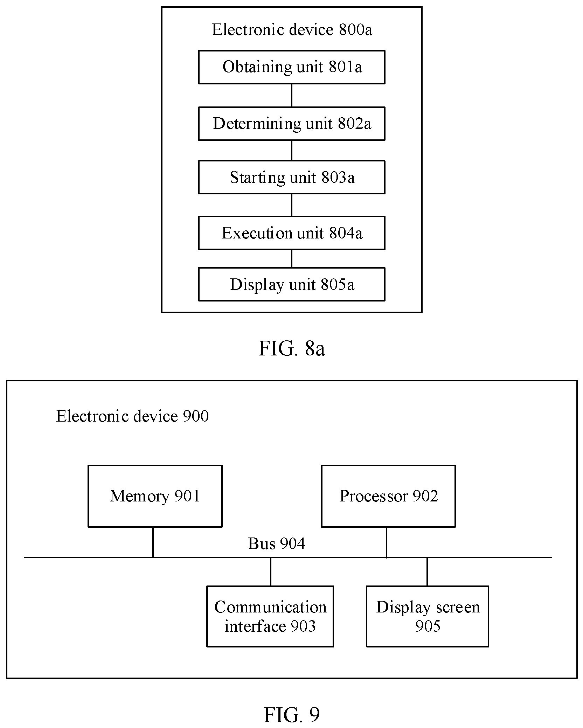

FIG. 8 is a diagram of a structure of an electronic device according to an embodiment of this application. As shown in FIG. 8, the electronic device 800 includes:
an obtaining unit 801, configured to obtain IMU data and illuminance data of the electronic device when a first event is detected;
a determining unit 802, configured to determine, based on the IMU data and the illuminance data of the electronic device, whether a user performs a first preset action; and
a starting unit 803, configured to: if it is determined that the user performs the first preset action, start a microphone of the electronic device, where the obtaining unit is further configured to obtain a first audio signal collected by the microphone;
the determining unit 802 is further configured to determine, based on the first audio signal, whether a type of the first audio signal is an approaching human voice; and
the starting unit 803 is further configured to start a voice assistant of the electronic device if it is determined that the type of the first audio signal is the approaching human voice.

In a possible implementation, the first event is a wrist raising hardware interrupt event, a hand raising hardware interrupt event of the electronic device, a press-to-wake event of the electronic device, a hand-raise-to-wake event of the electronic device, or a wrist-raise-to-wake event of the electronic device.

In a possible implementation, the obtaining unit 801 is further configured to: after the starting unit 803 starts the microphone of the electronic device, continuously obtain IMU data and illuminance data that are collected by the electronic device;
the determining unit 802 is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit 803 is specifically configured to:
   start the voice assistant of the electronic device if it is determined that the type of the first audio signal is the approaching human voice and determined that the user performs the second preset action.

In a possible implementation, the starting unit 803 is further configured to:
if it is determined that the user does not perform the second preset action, turn off the microphone of the electronic device.

In a possible implementation, collection duration of the IMU data and the illuminance data that are used to determine whether the user performs the first preset action is first preset duration; collection duration of the IMU data and the illuminance data that are used to determine whether the user performs the second preset action is second preset duration; and the first preset duration is greater than the second preset duration.

In a possible implementation, the first event is the wrist raising hardware interrupt event, the hand raising hardware interrupt event of the electronic device, the hand-raise-to-wake event of the electronic device, or the wrist-raise-to-wake event of the electronic device; and in the aspect of obtaining the IMU data and the illuminance data of the electronic device, the obtaining unit 801 is specifically configured to:
start an ambient light sensor of the electronic device, collect the ambient illuminance data of the electronic device, continue to collect the IMU data, obtain buffered IMU data related to the first event, and perform zero padding on illuminance data related to the first event.

In a possible implementation, duration of the first audio signal is less than or equal to 0.5s, and determining, based on the first audio signal, whether the type of the first audio signal is the approaching human voice is implemented by a digital signal processor (digital signal processor, DSP) of the electronic device.

In a possible implementation, the first audio signal is obtained through collection by a plurality of microphones of the electronic device.

In a possible implementation, the determining unit 802 is further configured to determine a to-be-executed task based on an audio signal collected by the microphone of the electronic device;
the obtaining unit 801 is further configured to obtain identity information of the user if the to-be-executed task is a sensitive task; and
the electronic device 800 further includes:
   an execution unit 804, configured to: determine the user as a target user based on the identity information of the user, and execute the to-be-processed task.

In a possible implementation, the electronic device 800 further includes:
a display unit 805, configured to: after the voice assistant is started, display, in real time, a text corresponding to the collected audio signal.

It should be noted that, for a specific function implementation of the electronic device, refer to the description of the foregoing speech interaction method. For example, the obtaining unit 801 is configured to perform related content of S201, the determining unit 802 is configured to perform related content of S202 and S204. The starting unit 803, the execution unit 804, and the display unit are configured to perform related content of S203 and S205. Details are not described herein again. The units or modules in the electronic device may be separately or together combined into one or more other units or modules, or one or more units or modules thereof may be split into a plurality of functionally smaller units or modules. This can implement same operations without affecting implementation of technical effect of embodiments of the present invention. The foregoing units or modules are divided based on logical functions. During actual application, functions of one unit (or module) may be implemented by a plurality of units (or modules), or functions of a plurality of units (or modules) may be implemented by one unit (or module).

FIG. 8a is a diagram of a structure of an electronic device according to an embodiment of this application. As shown in FIG. 8a, the electronic device 800a includes:
an obtaining unit 801a, configured to obtain IMU data of a first device when a first event is detected;
a determining unit 802a, configured to determine, based on the IMU data of the first device, whether a user performs a first preset action; and
a starting unit 803a, configured to: if it is determined that the user performs the first preset action, start a microphone of the first device, where the obtaining unit is further configured to obtain a first audio signal collected by the microphone;
the determining unit 802a is further configured to determine, based on the first audio signal, whether a type of the first audio signal is an approaching human voice; and
the starting unit 803a is further configured to start a voice assistant of the first device if it is determined that the type of the first audio signal is the approaching human voice.

The first event is a wrist raising event of the first device, a hand raising event of the first device, or a wrist rotation event of the first device; and the wrist raising event of the first device, the hand raising event of the first device, and the wrist rotation event of the first device are all obtained by using a same event prediction model.

In a possible implementation, in the aspect of determining, based on the IMU data of the first device, whether the user performs the first preset action, the determining unit 802a is further configured to:

The first device obtains posture information of the first device through calculation based on the IMU data of the first device; obtains acceleration information of the first device from the IMU data of the first device; and if the posture information of the first device is within a preset posture range, the acceleration information of the first device is within a preset acceleration range, and duration of the first event is within a preset duration range, the first device determines that the user performs the first preset action.

In a possible implementation, the obtaining unit 801a is further configured to: after the starting unit starts the microphone of the electronic device, continuously obtain IMU data and illuminance data that are collected by the electronic device;
the determining unit 802a is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit 803a is specifically configured to:
   start the voice assistant of the electronic device if it is determined that the type of the first audio signal is the approaching human voice and determined that the user performs the second preset action.

In a possible implementation, duration of the first audio signal is less than or equal to 0.5s, and determining, based on the first audio signal, whether the type of the first audio signal is the approaching human voice is implemented by a DSP of the electronic device.

In a possible implementation, the first audio signal is obtained through collection by a plurality of microphones of the electronic device.

In a possible implementation, the determining unit 802a is further configured to determine a to-be-executed task based on an audio signal collected by the microphone of the electronic device;
the obtaining unit 801a is further configured to obtain identity information of the user if the to-be-executed task is a sensitive task; and
the electronic device 800a further includes:
   an execution unit 804a, configured to: determine the user as a target user based on the identity information of the user, and execute the to-be-processed task.

In a possible implementation, the electronic device 800a further includes:
a display unit 805a, configured to: after the voice assistant is started, display, in real time, a text corresponding to the collected audio signal.

It should be noted that, for a specific function implementation of the electronic device, refer to the description of the foregoing speech interaction method. The units or modules in the electronic device may be separately or together combined into one or more other units or modules, or one or more units or modules thereof may be split into a plurality of functionally smaller units or modules. This can implement same operations without affecting implementation of technical effect of embodiments of the present invention. The foregoing units or modules are divided based on logical functions. During actual application, functions of one unit (or module) may be implemented by a plurality of units (or modules), or functions of a plurality of units (or modules) may be implemented by one unit (or module).

On the basis of the descriptions of the foregoing method embodiment and apparatus embodiment, FIG. 9 is a diagram of a structure of an electronic device 900 according to an embodiment of the present invention. The electronic device 900 (the electronic device 900 may be specifically a computer device) shown in FIG. 9 includes a memory 901, a processor 902, a communication interface 903, a display screen 905, and a bus 904. The memory 901, the processor 902, the communication interface 903, and the display screen 905 implement a communication connection to each other through the bus 904.

The memory 901 may be a read-only memory (Read-Only Memory, ROM), a static storage device, a dynamic storage device, or a random access memory (Random Access Memory, RAM).

The memory 901 may store a program. When the program stored in the memory 901 is executed by the processor 902, the processor 902 and the communication interface 903 are configured to perform steps of the speech interaction method in embodiments of this application.

The processor 902 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the electronic device 900 in embodiments of this application, or perform the speech interaction method in method embodiments of this application.

Alternatively, the processor 902 may be an integrated circuit chip, and has a signal processing capability. In an implementation process, the steps of the speech interaction method in this application may be implemented by using an integrated logic circuit of hardware in the processor 902 or instructions in a form of software. The processor 902 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly performed by a hardware decoding processor, or may be performed by using a combination of hardware and software modules in the decoding processor. The software module may be located in a mature storage medium in the art, like a random access memory, a flash memory, a read-only memory, a programmable read-only memory, an electrically erasable programmable memory, or a register. The storage medium is located in the memory 901. The processor 902 reads information in the memory 901, and completes, in combination with hardware of the processor, functions to be performed by units included in the network electronic device in embodiments of this application, or performs the speech interaction method in the method embodiments of this application.

The communication interface 903 uses a transceiver apparatus, for example but not limited to, a transceiver, to implement communication between the electronic device 900 and another device or a communication network. For example, data may be obtained through the communication interface 903.

The bus 904 may include a channel for transferring information between various components (for example, the memory 901, the processor 902, and the communication interface 903) of the electronic device 900.

The display screen 905 is configured to: display, after a voice assistant is started, a text corresponding to a collected audio signal, and certainly further display a text of reply information of the voice assistant for the collected audio signal. It should be noted that the display screen 905 may be an LCD screen, an LED screen, or an OLED screen, or certainly may be another display screen. This is not limited herein.

It should be noted that although only the memory, the processor, and the communication interface are shown in the electronic device 900 shown in FIG. 9, in a specific implementation process, a person skilled in the art should understand that the electronic device 900 further includes another component necessary for normal operation, for example, a display. In addition, based on a specific requirement, a person skilled in the art should understand that the electronic device 900 may further include hardware components for implementing other additional functions. In addition, a person skilled in the art should understand that the electronic device 900 may include only components for implementing embodiments of this application, but not necessarily include all the components shown in FIG. 9.

An embodiment of this application further provides a chip. The chip includes a processor and a data interface. The processor reads, through the data interface, instructions stored in a memory, to implement the speech interaction method.

Optionally, in an implementation, the chip may further include the memory, the memory stores the instructions, and the processor is configured to execute the instructions stored in the memory. When the instructions are executed, the processor is configured to perform the speech interaction method.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium like a data storage medium, or may include any communication medium that facilitates transmission of a computer program from one place to another place (for example, according to a communication protocol). In this manner, the computer-readable medium may generally correspond to: (1) a non-transitory tangible computer-readable storage medium, or (2) a communication medium like a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of instance and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if an instruction is transmitted from a website, a server, or another remote source through a coaxial cable, an optical fiber, a twisted pair, a digital subscriber line (DSL), or a wireless technology like infrared, radio, or microwave, the coaxial cable, the optical fiber, the twisted pair, the DSL, or the wireless technology like infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using lasers. Combinations of the above should also be included within the scope of the computer-readable medium.

An instruction may be executed by one or more processors such as one or more digital signal processors (DSPs), a general microprocessor, an application-specific integrated circuit (ASIC), a field programmable logic array (FPGA), or an equivalent integrated circuit or a discrete logic circuit. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (IC), or a set of ICs (for example, a chip set). Various components, modules, or units are described in this application to emphasize functional aspects of apparatuses configured to perform the disclosed techniques, but do not necessarily require realization by different hardware units. Actually, as described above, various units may be combined with appropriate software and/or firmware into a coding hardware unit, or provided by an interoperable hardware unit (including the one or more processors described above).

It may be clearly understood by a person skilled in the art that, for the purpose of convenient and brief description, for a detailed working process of the foregoing system, apparatus, and unit, refer to the specific description of a corresponding step process in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A speech interaction method, applied to a first device, wherein the method comprises:
obtaining IMU data and illuminance data of the first device when detecting a first event;
determining, based on the IMU data and the illuminance data of the first device, whether a user performs a first preset action;
if determining that the user performs the first preset action, starting a microphone of the first device, and obtaining a first audio signal collected by the microphone;
determining, based on the first audio signal, whether a type of the first audio signal is an approaching human voice; and
starting a voice assistant of the first device if determining that the type of the first audio signal is the approaching human voice.

2. The method according to claim 1, wherein the first event is a wrist raising hardware interrupt event, a hand raising hardware interrupt event of the first device, a press-to-wake event of the first device, a hand-raise-to-wake event of the first device, or a wrist-raise-to-wake event of the first device.

3. The method according to claim 1 or 2, wherein the method further comprises:
after starting the microphone of the first device, continuously obtaining IMU data and illuminance data that are collected by the first device;
determining, based on the IMU data and the illuminance data that are collected by the first device, whether the user performs a second preset action; and
starting the voice assistant of the first device if determining that the type of the first audio signal is the approaching human voice comprises:
starting the voice assistant of the first device if determining that the type of the first audio signal is the approaching human voice and determining that the user performs the second preset action.

4. The method according to claim 3, wherein the method further comprises:
if determining that the user does not perform the second preset action, turning off the microphone of the first device.

5. The method according to claim 3 or 4, wherein
collection duration of the IMU data and the illuminance data that are used to determine whether the user performs the first preset action is first preset duration;
collection duration of the IMU data and the illuminance data that are used to determine whether the user performs the second preset action is second preset duration; and
the first preset duration is greater than the second preset duration.

6. The method according to claim 2, wherein the first event is the wrist raising hardware interrupt event, the hand raising hardware interrupt event of the first device, the hand-raise-to-wake event of the first device, or the wrist-raise-to-wake event of the first device; and obtaining the IMU data and the illuminance data of the first device comprises:
starting an ambient light sensor of the first device, collecting the ambient illuminance data of the first device, continuing to collect the IMU data, obtaining buffered IMU data related to the first event, and performing zero padding on illuminance data related to the first event.

7. The method according to any one of claims 1 to 6, wherein duration of the first audio signal is less than or equal to 0.5s, and determining, based on the first audio signal, whether the type of the first audio signal is the approaching human voice is implemented by a digital signal processor DSP of the first device.

8. The method according to any one of claims 1 to 7, wherein the first audio signal is obtained through collection by a plurality of microphones of the first device.

9. The method according to any one of claims 1 to 8, wherein the method further comprises:
determining a to-be-executed task based on an audio signal collected by the microphone of the first device;
obtaining identity information of the user if the to-be-executed task is a sensitive task; and
determining the user as a target user based on the identity information of the user, and executing the to-be-processed task.

10. The method according to any one of claims 1 to 9, wherein the method further comprises:
after starting the voice assistant, displaying, by the first device in real time, a text corresponding to the collected audio signal.

11. A speech interaction method, applied to a first device, wherein the method comprises:
obtaining IMU data of the first device when detecting a first event, wherein the first event is a wrist raising event of the first device, a hand raising event of the first device, or a wrist rotation event of the first device; and the wrist raising event of the first device, the hand raising event of the first device, and the wrist rotation event of the first device are all obtained by using a same event prediction model;
determining, based on the IMU data of the first device, whether a user performs a first preset action;
if determining that the user performs the first preset action, starting a microphone of the first device, and obtaining a first audio signal collected by the microphone;
determining, based on the first audio signal, whether a type of the first audio signal is an approaching human voice; and
starting a voice assistant of the first device if determining that the type of the first audio signal is the approaching human voice.

12. The method according to claim 11, wherein determining, based on the IMU data of the first device, whether the user performs the first preset action comprises:
obtaining posture information of the first device through calculation based on the IMU data of the first device;
obtaining acceleration information of the first device from the IMU data of the first device; and
if the posture information of the first device is within a preset posture range, the acceleration information of the first device is within a preset acceleration range, and duration of the first event is within a preset duration range, determining that the user performs the first preset action.

13. The method according to claim 11 or 12, wherein the method further comprises:
after starting the microphone of the first device, continuously obtaining IMU data and illuminance data that are collected by the first device;
determining, based on the IMU data and the illuminance data that are collected by the first device, whether the user performs a second preset action; and
starting the voice assistant of the first device if determining that the type of the first audio signal is the approaching human voice comprises:
starting the voice assistant of the first device if determining that the type of the first audio signal is the approaching human voice and determining that the user performs the second preset action.

14. The method according to claim 13, wherein the method further comprises:
if determining that the user does not perform the second preset action, turning off the microphone of the first device.

15. The method according to any one of claims 11 to 14, wherein duration of the first audio signal is less than or equal to 0.5s, and determining, based on the first audio signal, whether the type of the first audio signal is the approaching human voice is implemented by a digital signal processor DSP of the first device.

16. The method according to any one of claims 11 to 15, wherein the first audio signal is obtained through collection by a plurality of microphones of the first device.

17. The method according to any one of claims 11 to 16, wherein the method further comprises:
determining a to-be-executed task based on an audio signal collected by the microphone of the first device;
obtaining identity information of the user if the to-be-executed task is a sensitive task; and
determining the user as a target user based on the identity information of the user, and executing the to-be-processed task.

18. The method according to any one of claims 11 to 17, wherein the method further comprises:
after starting the voice assistant, displaying, by the first device in real time, a text corresponding to the collected audio signal.

19. An electronic device, comprising:
an obtaining unit, configured to obtain IMU data and illuminance data of the electronic device when a first event is detected;
a determining unit, configured to determine, based on the IMU data and the illuminance data of the electronic device, whether a user performs a first preset action; and
a starting unit, configured to: if it is determined that the user performs the first preset action, start a microphone of the electronic device, wherein the obtaining unit is further configured to obtain a first audio signal collected by the microphone;
the determining unit is further configured to determine, based on the first audio signal, whether a type of the first audio signal is an approaching human voice; and
the starting unit is further configured to start a voice assistant of the electronic device if it is determined that the type of the first audio signal is the approaching human voice.

20. The electronic device according to claim 19, wherein the first event is a wrist raising hardware interrupt event, a hand raising hardware interrupt event of the electronic device, a press-to-wake event of the electronic device, a hand-raise-to-wake event of the electronic device, or a wrist-raise-to-wake event of the electronic device.

21. The electronic device according to claim 19 or 20, wherein
the obtaining unit is further configured to: after the starting unit starts the microphone of the electronic device, continuously obtain IMU data and illuminance data that are collected by the electronic device;
the determining unit is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit is specifically configured to:
start the voice assistant of the electronic device if it is determined that the type of the first audio signal is the approaching human voice and determined that the user performs the second preset action.

22. The electronic device according to claim 21, wherein the starting unit is further configured to:
if it is determined that the user does not perform the second preset action, turn off the microphone of the electronic device.

23. The electronic device according to claim 21 or 22, wherein
collection duration of the IMU data and the illuminance data that are used to determine whether the user performs the first preset action is first preset duration;
collection duration of the IMU data and the illuminance data that are used to determine whether the user performs the second preset action is second preset duration; and
the first preset duration is greater than the second preset duration.

24. The electronic device according to claim 20, wherein the first event is the wrist raising hardware interrupt event, the hand raising hardware interrupt event of the electronic device, the hand-raise-to-wake event of the electronic device, or the wrist-raise-to-wake event of the electronic device; and in the aspect of obtaining the IMU data and the illuminance data of the electronic device, the obtaining unit is specifically configured to:
start an ambient light sensor of the electronic device, collect the ambient illuminance data of the electronic device, continue to collect the IMU data, obtain buffered IMU data related to the first event, and perform zero padding on illuminance data related to the first event.

25. The electronic device according to any one of claims 19 to 24, wherein duration of the first audio signal is less than or equal to 0.5s, and determining, based on the first audio signal, whether the type of the first audio signal is the approaching human voice is implemented by a digital signal processor DSP of the electronic device.

26. The electronic device according to any one of claims 19 to 25, wherein the first audio signal is obtained through collection by a plurality of microphones of the electronic device.

27. The electronic device according to any one of claims 19 to 26, wherein
the determining unit is further configured to determine a to-be-executed task based on an audio signal collected by the microphone of the electronic device;
the obtaining unit is further configured to obtain identity information of the user if the to-be-executed task is a sensitive task; and
the electronic device further comprises:
an execution unit, configured to: determine the user as a target user based on the identity information of the user, and execute the to-be-processed task.

28. The electronic device according to any one of claims 19 to 27, wherein the electronic device further comprises:
a display unit, configured to: after the voice assistant is started, display, in real time, a text corresponding to the collected audio signal.

29. An electronic device, comprising:
an obtaining unit, configured to obtain IMU data of the electronic device when a first event is detected, wherein the first event is a wrist raising event of a first device, a hand raising event of a first device, or a wrist rotation event of a first device; and the wrist raising event of the first device, the hand raising event of the first device, and the wrist rotation event of the first device are all obtained by using a same event prediction model;
a determining unit, configured to determine, based on the IMU data of the electronic device, whether a user performs a first preset action; and
a starting unit, configured to: if it is determined that the user performs the first preset action, start a microphone of the electronic device, and obtain a first audio signal collected by the microphone, wherein
the determining unit is further configured to determine, based on the first audio signal, whether a type of the first audio signal is an approaching human voice; and
the starting unit is further configured to start a voice assistant of the electronic device if it is determined that the type of the first audio signal is the approaching human voice.

30. The electronic device according to claim 29, wherein in the aspect of determining, based on the IMU data of the electronic device, whether the user performs the first preset action, the determining unit is specifically configured to:
obtain posture information of the electronic device through calculation based on the IMU data of the electronic device;
obtain acceleration information of the electronic device from the IMU data of the electronic device; and
if the posture information of the electronic device is within a preset posture range, the acceleration information of the electronic device is within a preset acceleration range, and duration of the first event is within a preset duration range, determine that the user performs the first preset action.

31. The electronic device according to claim 29 or 30, wherein
the obtaining unit is further configured to: after the starting unit starts the microphone of the electronic device, continuously obtain IMU data and illuminance data that are collected by the electronic device;
the determining unit is further configured to determine, based on the IMU data and the illuminance data that are collected by the electronic device, whether the user performs a second preset action; and
in the aspect of starting the voice assistant of the electronic device if it is determined that the type of the first audio signal is the approaching human voice, the starting unit is specifically configured to:
start the voice assistant of the electronic device if it is determined that the type of the first audio signal is the approaching human voice and determined that the user performs the second preset action.

32. The electronic device according to claim 31, wherein the starting unit is further configured to:
if it is determined that the user does not perform the second preset action, turn off the microphone of the electronic device.

33. The electronic device according to any one of claims 29 to 32, wherein duration of the first audio signal is less than or equal to 0.5s, and determining, based on the first audio signal, whether the type of the first audio signal is the approaching human voice is implemented by a digital signal processor DSP of the electronic device.

34. The electronic device according to any one of claims 29 to 33, wherein the first audio signal is obtained through collection by a plurality of microphones of the electronic device.

35. The electronic device according to any one of claims 29 to 34, wherein
the determining unit is further configured to determine a to-be-executed task based on an audio signal collected by the microphone of the electronic device;
the obtaining unit is further configured to obtain identity information of the user if the to-be-executed task is a sensitive task; and
the electronic device further comprises:
an execution unit, configured to: determine the user as a target user based on the identity information of the user, and execute the to-be-processed task.

36. The electronic device according to any one of claims 29 to 35, wherein the electronic device further comprises:
a display unit, configured to: after the voice assistant is started, display, in real time, a text corresponding to the collected audio signal.

37. An electronic device, comprising a processor and a memory, wherein the memory is configured to store program code, and the processor is configured to execute the program code, to implement the method according to any one of claims 1 to 18.

38. A computer-readable storage medium, wherein the computer-readable storage medium stores a computer program, and when the computer program is executed by a processor, the method according to any one of claims 1 to 18 is implemented.
